# EUROPÄISCHE PATENTSCHRIFT

(11) **EP 2 245 256 B1**
(45) Veröffentlichungstag und Bekanntmachung des Hinweises auf die Patenterteilung: **06.07.2011**
(21) Anmeldenummer: 09707037.9
(22) Anmeldetag: 26.01.2009
(51) Int. Cl.: E21B 7/00, E21D 7/00

(54) **VERFAHREN UND VORRICHTUNG ZUM ERSTELLEN EINER TIEFBOHRUNG**
METHOD AND DEVICE FOR CREATING A DEEP BOREHOLE
PROCÉDÉ ET DISPOSITIF POUR L'EXÉCUTION D'UN SONDAGE

(30) Priorität: 28.01.2008 DE 102008006392
(43) Veröffentlichungstag der Anmeldung: 03.11.2010
(73) Patentinhaber: Herrenknecht Vertical Gmbh, 77961 Schwanau (DE)
(72) Erfinder: SUHM, Werner, 77723 Gengenbach (DE); BINDER, Jürgen, 77933 Lahr-Sulz (DE); RUDER, Martin, 77723 Gengenbach (DE); BACK, Michael, 94560 Offenberg (DE)
(74) Vertreter: Wetzel, Philipp
(86) Internationale Anmeldenummer: PCT/EP2009/000485
(87) Internationale Veröffentlichungsnummer: WO 2009/095195

(56) Entgegenhaltungen:
- US-A- 4 108 255
- US-A- 4 255 068
- US-A- 4 691 788

## Beschreibung

Die Erfindung betrifft ein Verfahren zum Erstellen einer Tiefbohrung in einem emissionssensitiven Bereich an Land und eine Vorrichtung dazu.

Tiefbohrungen werden seit Jahrzehnten zur Exploration von Erdöl- und Erdgasvorkommen bis in Tiefen von über 5000 m hergestellt.

Das Niederbringen einer Tiefbohrung erfordert einen Bohrplatz an der Oberfläche um den Bohrort herum von nicht unerheblicher Größe. Dort sind neben der Bohranlage selbst die Energieversorgung, die für das Bereitstellen und Umpumpen der Bohrspülung notwendigen Aggregate, Kauen, Aufenthaltsräume und Verwaltung sowie ein Lager für die Bohrstangen und andere Betriebsmittel notwendig. Aus Sicherheitsgründen und aus Emissionsschutzgründen ist auch ein erheblicher Abstand zu eventuell umgebender Siedlungsbebauung notwendig.

In jüngerer Zeit werden Tiefbohrungen auch zur Erschließung und Nutzung von Erdwärme ausgeführt. Dabei werden entweder unterirdische Aquifere erschlossen und das heiße Wasser direkt gefördert oder es wird in so genannten offenen Systemen mit einer Speisebohrung und Förderbohrung das Wasser durch den dazwischen liegenden Boden als Wärmetauscher geführt und aufgeheizt, bevor es gefördert wird. Das geförderte Wasser, meist in Form von Wasserdampf, wird dann durch Turbinen zur Stromerzeugung geleitet.

Die zweite Nutzungsform ist die direkte Wärmenutzung in Form von Fernwärme. Gerade hier ist die Nähe zum Verbraucher für die Effizienz und den Wirkungsgrad der Fernwärme aufgrund von Transportverlusten von entscheidender Bedeutung. Die Herstellung solcher Tiefbohrungen in Verbrauchernähe oder gar in innerstädtischer Lage ist aber aus verschiedenen, unter anderem den zuvor genannten Gründen, nicht unproblematisch. Zum einen hat der laufende Bohrbetrieb nicht unwesentliche Auswirkungen wie Schall, Schmutz und Baustellenbetrieb allgemein auf die Umgebung (Emissionsschutz). Zum anderen sind gerade in innerstädtischer Lage besondere Sicherheitsvorkehrungen aufgrund der Gefahrenlage beim Erstellen von Tiefbohrungen zu treffen und Abstände zu der umgebenden Bebauung einzuhalten, die sehr große Baustelleneinrichtungsflächen erfordern würden, die oft nicht realisierbar sind.

Weiterhin befinden sich zu erschließende Lagerstätten oft in Bereichen besonders sensitiver bzw. zu schützender Natur, beispielsweise Ufer nahe Bereiche/Wattenmeer, besonders emissionsempfindliche Fauna etc.. Aufgrund der zuvor genannten Einwirkungen ist in solchen Bereichen das Niederbringen einer Tiefbohrung häufig ausgeschlossen. Als Lagerstätten sind zu verstehen insbesondere Lagerstätten von Kohlenwasserstoffen, Gasen, Speicherlagerstätten für Gase, Flüssigkeiten oder sonstige in Poren und/oder Klüften zu verbringende flüssige Produkte, Gase oder Abfälle jeglicher Art.

US 4,108,255 offenbart eine Vorrichtung und ein Verfahren, mit dem Ölbohrungen erstellt werden. Hierfür wird an Land ein Gebäude errichtet, in dem die Bohranlage untergebracht wird, sodass sie gegen die Außenwelt abgeschottet ist. Für den Betrieb auf See wird das Gebäude als Caisson ausgeführt, das dann auf dem Meeresgrund verändert wird. Das Caisson ist aus Beton hergestellt. Die Bestandteile der Bohranlage werden ebenfalls im Gebäude bzw. Caisson untergebracht.

Der Erfindung liegt die Aufgabe zugrunde, ein Bohrverfahren und eine Bohrvorrichtung bereit zu stellen, mit der auch in gegenüber Emissionen sensitiven Bereichen wie innerstädtischer Bebauung oder in zu schützender Natur Tiefbohrungen erstellt werden können, und gleichzeitig signifikante Beeinträchtigungen für diese Bereiche beim Erstellen der Tiefbohrung zu reduzieren.

Gelöst wird diese Aufgabe hinsichtlich des Verfahrens durch, ein Verfahren zum Erstellen einer Tiefbohrung in einem emissionssensitiven Bereich an Land mit den Schritten: Erstellen eines Schachtbauwerks; Einbauen einer stationären Bohranlage in das Schachtbauwerk; Vorbereiten einer Sohle des Schachtbauwerks als Bohransatzpunkt, wobei ein Turm der Bohranlage an wenigstens einer Wand des Schachtbauwerks befestigt wird und ein Bohrgestängelager im Schachtbauwerk senkrecht an einer Wand des Schachtbauwerks angeordnet wird; Niederbringen der Tiefbohrung mit einem geeigneten Bohrverfahren.

Das erfindungsgemäße Verfahren bewirkt, dass durch das Anordnen der Bohranlage im Schachtbauwerk die Emissionen hinsichtlich Schalls etc. minimiert werden. Durch eine teilweise oder vollständige Unterbringung des Bohrturms im Schacht können die Sicherheitsabstände zur angrenzenden Bebauung stark reduziert werden. Ein Umkippen des Bohrturms auf die angrenzende Bebauung wird zum einen durch die Schachtwand und zum anderen durch die Verankerung des Bohrturms an der Schachtwand verhindert. Äußere Einflüsse durch Windkräfte auf den Bohrturm werden so minimiert. Durch die Unterbringung der Bohrtechnik im Schacht werden weiter die Emissionen von Schall und Schmutz auf der Baustellenfläche reduziert und die Optik der Baustelle verbessert, da lediglich der An- und Abtransport von Materialien an der Oberfläche erfolgen muss. Alle wesentlichen Bohrtätigkeiten werden im Schacht ausgeführt. Aus umwelttechnischer Sicht hat das Aufstellen der Tiefbohrtechnik im Schacht besondere Vorteile. Austretende Flüssigkeiten während des Bohrprozesses verteilen sich nicht wie üblich auf dem Bohrplatz, sondern werden im Schacht direkt aufgefangen. Der nach innen und außen dichte Schacht wirkt hier wie eine Ölwanne, die eine Verschmutzung des Bodens und Grundwassers verhindert. Weiter gewährt, durch die Aufstellung der Bohrtechnik im Schacht, die ohnehin schallemissionsoptimierte Bohrtechnik einen noch leiseren Bohrbetrieb. Dies ist gerade in oder in der Nähe von dichten Besiedlungen und in Verbrauchernähe von entscheidender Bedeutung für die Akzeptanz der Bohr- und Bauarbeiten.

Die nachfolgend genannten weiteren Ausgestaltungen der Erfindung beziehen sich sowohl auf die erfindungsgemäße Vorrichtung wie auch auf das erfindungsgemäße Verfahren.

Weiterhin wird die erfindungsgemäße Aufgabe durch eine Bohrvorrichtung zur Durchführung des zuvor beschriebenen Verfahrens mit einem Schachtbauwerk und einer stationären Bohranlage, die im Schachtbauwerk angeordnet ist, wobei ein Turm der Bohranlage an wenigstens einer Wand des Schachtbauwerks befestigt ist und ein Bohrgestängelager im Schachtbauwerk senkrecht an einer Wand des Schachtbauwerks angeordnet ist.

Die erfindungsgemäße Vorrichtung bewirkt zusätzlich zu den zuvor genannten Vorteilen, dass, durch die Möglichkeit, die Schachtwände als tragendes Bauwerk, für Verankerungen oder Stützungen, mit zu verwenden, sich neue Möglichkeiten der Bohrturmkonstruktion und Bohrablaufautomatisierung ergeben. Es wird möglich, die Bohrturmtechnik zu verkleinern und zu verschlanken, um Kosten einzusparen. Darüber hinaus gewährleistet eine zusätzliche Automatisierung des Bohrablaufs eine Verringerung des Bohrpersonals im Schacht und somit in der Gefahrenzone.

Eine vorteilhafte Lehre der Erfindung sieht vor, dass das Schachtbauwerk mit einer automatischen Schachtabsenkmaschine, bergmännisch im Bohr- und Sprengverfahren und/oder mittels Gefrierschachtverfahren hergestellt wird.

Weiterhin ist vorteilhaft, dass die Tiefe des Schachtbauwerks 15 bis 100 m bevorzugt 30 bis 50 m beträgt. Eine weitere vorteilhafte Lehre der Erfindung sieht vor, dass der Durchmesser des Schachtbauwerks bis 20 m, bevorzugt bis 15 m beträgt. Auf diese Weise kann ein Schachtbauwerk bereitgestellt werden, dass die notwendigen Dimensionen zur vollständigen Aufnahme einer Bohranlage ermöglicht.

Weiterhin ist vorteilhaft, dass eine Energieversorgung der Bohranlage im Schachtbauwerk angeordnet wird. Eine weitere vorteilhafte Lehre der Erfindung sieht vor, dass Hilfsaggregate, insbesondere Tanks, Pumpen und/oder Aufbereitungsvorrichtungen für das Bereitstellen einer Bohrspülung im Schachtbauwerk, angeordnet werden/sind. Dadurch werden die Emissionen an der Oberfläche reduziert. Weiterhin wird der Flächenverbrauch für den Bohrplatz selber reduziert.

Weiterhin ist vorteilhaft, dass das Schachtbauwerk abgedeckt wird/ist. Durch eine vollständige Abdeckung des Schachts ist ein minimaler Eingriff an der Oberfläche durch die Bohrarbeiten und eine Entkopplung des Baubetriebs von der Oberfläche möglich. Weiterhin werden am Bohrturm arbeitende Personen durch die Möglichkeit einer Schachtabdeckung minimalen Witterungseinflüssen (Kälte, Regen) ausgesetzt. Weiter dient eine komplette Abdeckung des Schachtbauwerkes auch der Trockenhaltung des Schachts bei Niederschlag und damit einer Reduzierung von Abwässern im Bau- und Bohrbetrieb.

Eine weitere vorteilhafte Lehre der Erfindung sieht vor, dass die Tiefe des Schachtbauwerks so ausgelegt wird/ist, dass die Bohranlage mit ihrer Gesamthöhe sich im Schachtbauwerk befindet. Ein Umkippen des Bohrturms auf die angrenzende Bebauung wird zum einen durch die Schachtwand und zum anderen durch die Verankerung des Bohrturms an der Schachtwand verhindert. Äußere Einflüsse durch Windkräfte auf den Bohrturm werden so minimiert. Durch das Vorsehen kürzerer Zylinder bei einem hydraulischen Hubwerk der Bohranlage, durch kürzere Hübe und/oder die Verwendung von Einzelgestängen als Bohrgestänge wird eine kompaktere Bauweise der Bohranlage ermöglicht und die erforderliche Schachttiefe reduziert.

Weiterhin ist vorteilhaft, dass das Schachtbauwerk an wenigstens ein untertägiges weiteres Bauwerk, insbesondere eine Strecke, einen Stollen und/oder eine Bohrung angeschlossen wird/ist. Bei Anschluss des Schachtes an ein derartiges unterirdisches Bauwerk kann dieses in der Bauphase als Baustelleneinrichtungsplatz mit genutzt werden und wesentliche Bestandteile der Baustelleneinrichtung dort platziert werden. Je nach Tunneldurchmesser können dort beispielsweise auch Separationseinrichtungen, Gestängelager, Nebenaggregate und/oder die Energiezufuhr für die Bohrarbeiten untergebracht werden. Eine weitere vorteilhafte Lehre der Erfindung sieht vor, dass das Schachtbauwerk in seinem Sohlenbereich mit Übertage verbunden wird. Dieses ermöglicht eine hinreichende Bewetterung. Weiterhin ist vorteilhaft, dass das Schachtbauwerk aktiv bewettert wird. Bei einer Anbindung des Schachtbauwerks an ein unterirdisches Bauwerk kann dieses bei Bestehen einer Verbindung mit Übertage für die Frischluftzufuhr herangezogen werden und dadurch eine aktive Bewetterung erfolgen. Dies ist gerade bei einer vollständigen Abdeckung des Schachtes von Vorteil, um im Falle von Blow-Outs Abzugsverhältnisse wie bei einer Aufstellung der Anlage an der Oberfläche sicher zu stellen. Zusätzlich zu den zuvor genannten Vorteilen kann bei einer Anbindung des Schachtbauwerks an einen unterirdischen Tunnel je nach Durchmesser dieser für eine Materialanlieferung und Abtransport mitgenutzt werden und eine Automatisierung des gesamten Bohrablaufs weiter gesteigert werden. Zusätzlich wird der Raum an der Oberfläche durch An- und Abtransport weniger beeinträchtigt. Weiterhin ist vorteilhaft, dass das Schachtbauwerk in seinem Sohlenbereich mit Übertage verbunden ist. Eine weitere vorteilhafte Lehre der Erfindung sieht vor, dass eine Bewetterung vorgesehen ist.

Bei einer Anbindung des Schachtbauwerks an einen unterirdischen Tunnel und vollständiger Abdeckung des Schachtbauwerkes werden Bau- bzw. Bohrarbeiten von der Oberfläche abgegrenzt und die Belastungen durch Schall, Schmutz etc. minimiert.

Eine weitere vorteilhafte Lehre der Erfindung sieht vor, dass von der Sohle des Schachtbauwerks eine Vertiefung im Bereich eines Bohrlochansatzpunktes erstellt wird, in die ein Blow-Out-Preventer eingebaut wird. Durch die Vertiefung von Blow-Out-Preventern in der Schachtsohle kann dazu die erforderliche Schachttiefe deutlich reduziert werden. Unterbauten, auf denen der Bohrturm konventionell angeordnet wird, können in Schachtnähe auf der Oberfläche platziert werden. Kürzere Zylinder, kürzere Hübe und die Verwendung von Einzelgestänge ermöglichen eine noch kompaktere Bauweise und reduzieren die erforderliche Schachttiefe weiter.

Weiterhin ist vorteilhaft, dass im Schachtbauwerk Arbeitsbühnen errichtet werden/sind. Durch die Möglichkeit der Anordnung von Arbeitsbühnen am Bohrturm werden zusätzliche Arbeitsflächen geschaffen und weiter das Arbeiten am Turm sicherer und praktischer durch die Möglichkeit der Ablage von Werkzeugen etc.. Weiterhin kann durch die Anordnungsmöglichkeit verschiedener Arbeitsbühnen ein verbesserter Sicherheitsabstand der Mitarbeiter zum Bohrgeschehen je nach Automatisierungsgrad der Bohranlage ermöglicht werden.

Die Vorteile einer Einbeziehung eines Schachtbauwerkes in die Erstellung von Tiefbohrungen bestehen nicht nur während des Bohrvortriebs, d.h. in der Bauphase, sondern auch in der Nutzungsphase nach Fertigstellung der Bohrung. Hier kann das Schachtbauwerk zur Unterbringung von Gerätetechnik, Pumpen, Aggregaten und evtl. Turbinen genutzt werden. Dieses hat Vorteile für den Flächenbedarf für solche Versorgungseinrichtungen an der Oberfläche. Hier werden weniger Flächen beansprucht.

Darüber hinaus erhöht die Unterbringung der Technik im Schacht die Sicherheit der Technik vor unbefugtem Betreten, Sabotage oder auch mutwilliger Beschädigung (terroristischen Anschlägen). Eine Erhöhung der Versorgungssicherheit wird hierdurch erreicht.

Bei einer Anbindung des Schachtbauwerks an einen unterirdischen Tunnel kann dieser sowohl in der Bauphase wie zuvor beschrieben aber auch nach Abschluss der Bohrarbeiten weiter genutzt werden. Hier kann zusätzlich zum Schachtbauwerk Gerätetechnik platziert werden. Weiter können die geförderten Medien direkt unterirdischen Verteilungssystemen (Pipelines) zugeführt und weitergeleitet werden. Ein direkter Zugang von Unbefugten zu Schacht, Gerätetechnik und Pipelines kann auf diese Weise kontrolliert werden.

Statt Bohrgestänge ist auch der Einsatz von Coil tubing denkbar. Dafür kann der aufgetrommelte Bohrstrang ggf. in einem optimalen Versatz zum Bohransatzpunkt im Schachtbauwerk aufgehängt werden, so dass möglichst wenige Umlenkungen beim Abtrommeln entstehen. Als Hubwerk für die Bohranlage kann eine hydraulische Anlage mit Hubzylindern verwendet werden. Alternativ oder auch ergänzend für besondere Fälle kann auch ein Seilhebewerk verwendet werden, dass u.U. getrennt vom Turm der Bohranlage oberhalb im Schacht aufgehängt wird/ist. Weiterhin kann auch direkt ein Casing Drilling Verfahren verwendet werden. Auch ist es möglich im Schacht oder in der Strecke vorbereitete Bohr- oder Produktionsrohrstränge einzusetzen, wenn beispielsweise besondere Anforderungen an die Dichtheit des Stranges in bestimmten Schichtenlagen, beispielsweise Trinkwasserschichten o.Ä. gefordert sind.

Das Schachtbauwerk kann nach Abschluss der Bohrarbeiten auch als Aufstellraum für ein Geothermiekraftwerk o.Ä. verwendet werden. Gleiches gilt für direkte Aufbreitungsanlagen für die Öl- oder Gasförderung.

Eine weitere Lehre der Erfindung sieht vor, dass das Schachtbauwerk mit mehreren Bohrpositionen vorbereitet wird/ist, in die die Bohranlage für das Niederbringen einer weiteren Bohrung jeweils nacheinander eingebaut wird, wenn die vorherige Bohrung fertig niedergebracht ist. Je nach Schachtdurchmesser und zur Verfügung stehenden Grundfläche wird die Anzahl von Bohransatzpunkten variiert. Jede Position ist beispielsweise mit einem Bohransatzpunkt, einer Vertiefung für einen Blow-Out-Preventer in der Schachtsohle und/oder mit einer Aufnahme und/oder einer Aussparung an der Schachtwand für das Anbringen einer Bohranlage versehen, wobei an die Aufnahme und/oder in die Aussparung vorteilhafter Weise die Führungen der Bohranlage angeordnet werden. Nach dem Niederbringen einer Bohrung wird die Bohranlage abgebaut und wieder am nächsten Bohransatzpunkt aufgebaut. Dieses ermöglicht eine optimale Ausnutzung des Schachtbauwerks zum Niederbringen der Bohrungen und ermöglicht einen schnellen und kontinuierlichen Bohrbetrieb, was insbesondere Bereitstellungszeiten von Bohranlagen niedrig halten kann. Als eine Alternative können diese Eiemente auch jeweils vor dem Niederbringen der nächsten Bohrung im Schacht vorbereitet werden und dann mit der Bohranlage verbunden werden.

Weiterhin ist es vorteilhaft möglich, von jedem Bohransatzpunkt aus abgelenkte Bohrungen niederzubringen. Dabei können die Bohrungen in jede beliebige Richtung sowohl vertikal als auch horizontal abgelenkt werden, um so in umweltsensitiven Regionen ein möglichst großes unterirdisches Reservoir bei minimalem Oberflächeneingriff erschließen zu können.

Nachfolgend wird die Erfindung anhand eines Ausführungsbeispiels anhand einer Zeichnung näher erläutert, wobei
- Fig. 1: eine räumliche Ansicht der erfindungsgemäßen Vorrichtung zeigt,
- Fig.2: eine Draufsicht zu Fig.1 zeigt,
- Fig. 3: eine Schnittansicht entlang A-A gemäß Fig. 2 zeigt,
- Fig. 4: eine Seitenansicht mit transparentem Schachtbauwerk zu Fig. 1 zeigt,
- Fig. 5: eine Ausschnittsansicht zu Fig. 1 zeigt, und
- Fig. 6: eine Schnittansicht einer weiteren erfindungsgemäßen Ausführungsform zeigt.

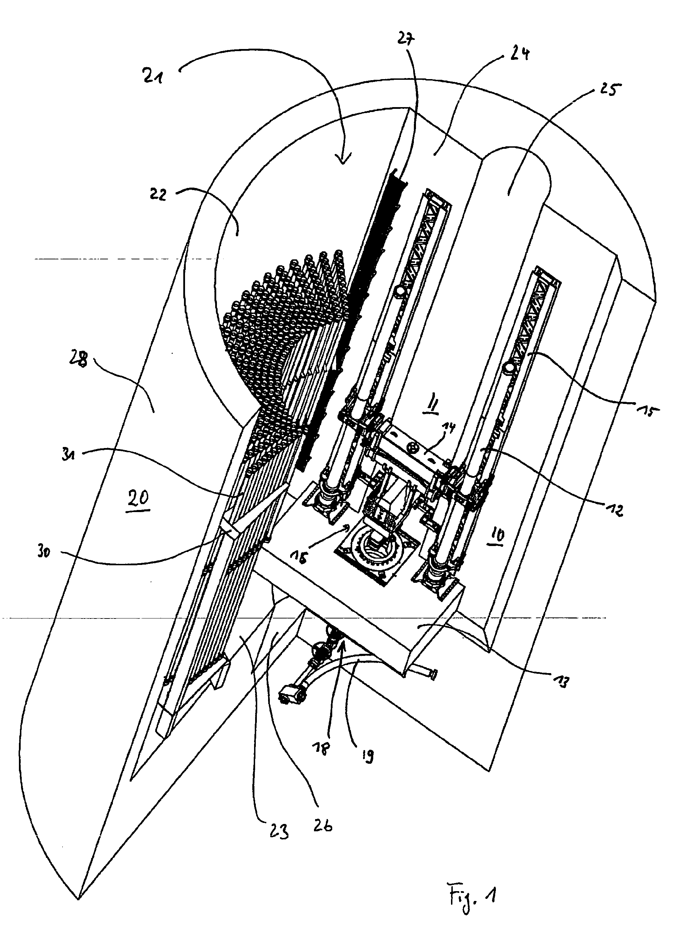

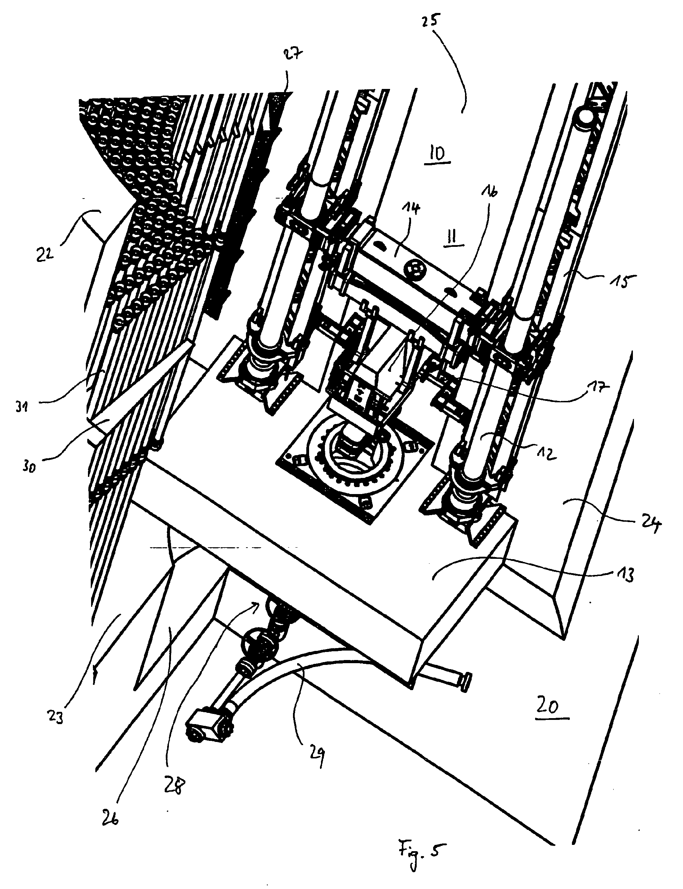

Fig. 1 und Fig. 5 zeigen eine erfindungsgemäße Bohrvorrichtung 10, die in einem Schachtbauwerk 20 angeordnet ist. Die Bohrvorrichtung 10 weist ein hydraulisches Hebewerk 11 auf, bei dem Hubzylinder 12 auf einer Bodenplatte 13 aufstehen. Zwischen den Hubzyiindern 12 ist ein Tragbalken 14 als Verbindungselement vorgesehen, der auf Führungen 15 vertikal geführt ist. Der Tragbalken 14 ist mit den Hubzylindern 12 fest verbunden und wird mittels der Hubzylinder vertikal im Schachtbauwerk 20 bewegt. Am Tragbalken 14 beweglich angeordnet ist ein Topdrive 16 zum Drehen des Bohrstrangs (nicht dargestellt) angeodnet. Der Topdrive 16 ist mit einem Schwenkwerk 17 versehen, über das der Topdrive 16 für die Aufnahme neuer Bohrstangen 31 verschwenkt werden kann. In der Bodenplatte 13 ist ein Drehteller zur Abfangung des Bohrstrangs vorgesehen, der den Bohrstrang im Fall des Ein- oder Ausbauens des Bohrstrangs hält, wenn dieser nicht am Hebewerk 11 eingehängt ist.

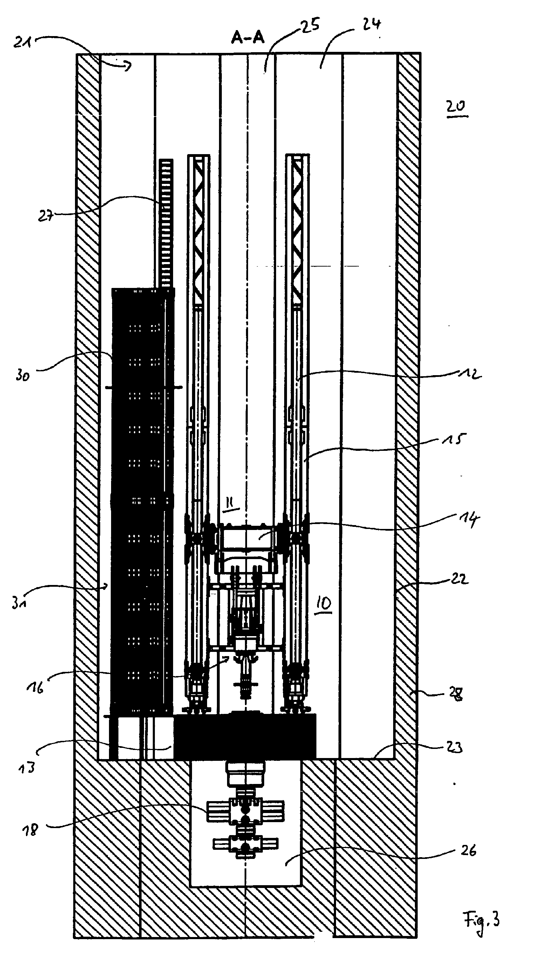

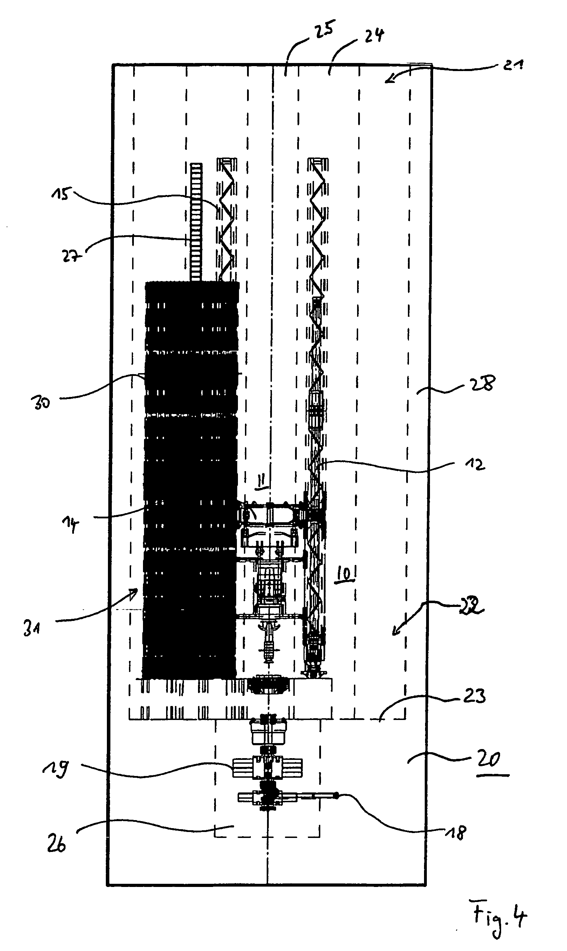

Das Schachtbauwerk 20 weist einen ringförmigen Querschnitt 21 auf (andere Querschnitte bspw. Rechteckig, ellipsenförmig, o.Ä. sind ebenfalls möglich), der durch Schachtwände 22 definiert ist, und wird an seiner Unterseite durch die Schachtsohle 23 begrenzt. Die Schachtwände 22 sind mit einem Ausbau 28, beispielsweise Tübbinge, versehen. An der Schachtwand 22 ist eine Aufnahme 24 angeordnet, an der die Bohrvorrichtung 10 angeordnet ist. Die Aufnahme 24 weist mittig eine Aussparung 25 auf, in den die Bohrvorrichtung 10 mit einem Schwenkwerk 17 für den Topdrive hineinragt und sich vertikal bewegen kann. Auf der Schachtsohle 23 ist eine Vertiefung 26 angeordnet, auf deren Sohle sich der Bohransatzpunkt (nicht dargestellt) befindet und in der ein Blow-Out-Preventer 18 der Bohranlage 10 angeordnet ist (siehe Fig. 3 und Fig. 4). Der Blow-Out-Preventer 18 ist mit einem Anschluss 19 an den Spülungskreislauf (nicht dargestellt) verbunden (siehe Fig. 1).

Auf der Aufnahme 24 sind die Führungen 15 des Hebewerks 11 angeordnet. Neben den Führungen 15 ist eine Leiter 27 als Reparatur- und Hilfsfahrung vorgesehen.

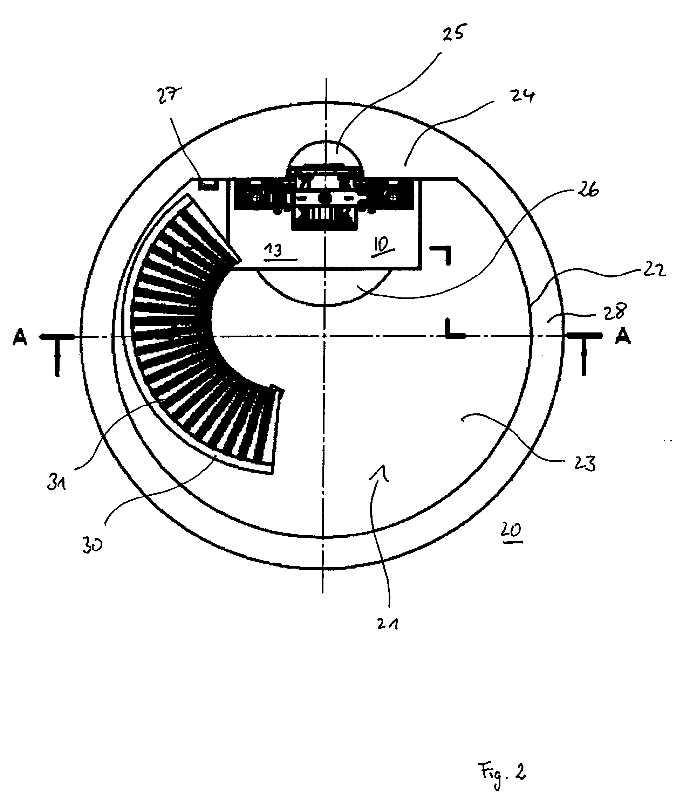

Fig. 2 zeigt eine Draufsicht zu Fig. 1. An der linken Seite des Schachtes 20 ist ein Bohrstangenmagazin 30 angeordnet, in dem die Bohrstangen 31 abgestellt sind, entweder als Lager für den weiteren Einbau, wenn die Bohrung um die Länge einer Bohrstange 31 abgeteuft ist, oder als Zwischenlager während des Einbauens und Ausbauens der Bohrstangen 31, um einen Bohrwerkzeugwechsel vorzunehmen.

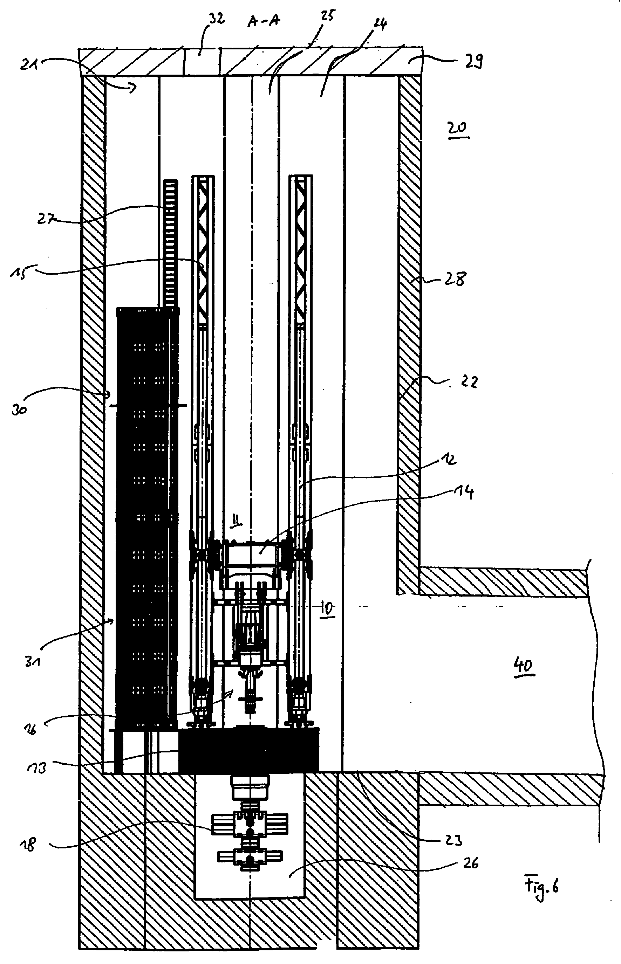

Fig. 6 zeigt eine weitere erfindungsgemäße Ausführungsform. Dabei ist das Schachtbauwerk 20 im Bereich seiner Sohle 23 mit einer Strecke 40 verbunden, die als Blindstrecke ausgeführt sein kann oder eine Verbindung mit Übertage aufweist. Das Schachtbauwerk 20 ist an seiner oberen Öffnung mit einer Abdeckung 29 versehen, die Öffnungen 32 zur Bewetterung des Schachtbauwerks 20 aufweist. Auf diese Weise wird die Abgabe von Emissionen aus dem Schacht wie Lärm oder Abgase reduziert. Die Form der Abdeckung kann auch kuppelartig o.Ä. ausgeführt sein. In der Strecke 40 können die Energieversorgung, weiter Lager für Bohrstangen und auch die Hilfsaggregate wie Pumpen und Tanks für die Spülung, als auch die Aufbereitung für die Bohrspülung angeordnet sein. Weiterhin kann, sofern die Strecke 40 auch für Fahrung geeignet ist, der Materialtransport für die Bohranlage über die Strecke 40 vorgenommen werden. Weiterhin kann auch die Bewetterung der Bohranlage über die Strecke 40 vorgenommen werden. Die Bohranlage 10 ist vollständig im Schachtbauwerk 20 angeordnet. Die Schachttiefe ist somit abhängig, wie lang ein Rohrabschnitt des Bohrstrangs ist. Sollen die Bohrstangen 31 einzeln eingebracht werden, so kann der Schacht kürzer ausfallen, allerdings dauern die Zeiten für das Wechseln eines Bohrwerkzeugs länger, da jede Bohrstange 31 einzeln ausgebaut werden muss. Die Bohrstangen 31 können auch als Doppel- oder Trippleabschnitte vorgesehen werden. Soll keine Abdeckung 29 vorgesehen werden, so ist es auch möglich, die Führungen 15 der Bohranlage 10 über das Schachtbauwerk 20 herausragen zu lassen. Eine Abdeckung kann dann durch ein oberirdischen Bauwerk erfolgen, analog einer Schachteinhausung im klassischen Bergbau.

In einer alternativen Ausführungsform (nicht dargestellt) der Erfindung ist das Schachtbauwerk 20 mit mehreren Bohrpositionen vorbereitet, in die die Bohranlage 10 jeweils eingebaut werden kann, wenn eine Bohrung fertig niedergebracht ist. Darüber hinaus kann auch je nach Schachtdurchmesser und zur Verfügung stehenden Grundfläche der Schachtsohle die Anzahl von Bohransatzpunkten variiert werden. Jede Position ist beispielsweise mit einem Bohransatzpunkt, einer Vertiefung 26 für einen Blow-Out-Preventer 18 und mit einer Aufnahme 24 und einer Aussparung 25 für das Anbringen einer Bohranlage 10 versehen, wobei an die Aufnahme 24 und in die Aussparung 25 die Führungen 15 der Bohranlage 10 angeordnet werden. Alternative können diese Elemente 24, 25, 26 auch jeweils vor dem Niederbringen der nächsten Bohrung vorbereitet werden und dann mit der Bohranlage 10 verbunden werden. Nach dem Niederbringen einer Bohrung wird die Bohranlage 10 abgebaut und wieder am nächsten Bohransatzpunkt ausgebaut.

Weiterhin kann das Schachtbauwerk 20 auch unterirdisch mit Ver- und Entsorgungsleitungen angebunden sein. Diese können im Microtunnelingverfahren erstellt werden. Weiterhin kommen gerichtete horizontale Bohrungen (HDD) oder auch ein direktes Pipelineverlegen als Erstellungsverfahren in Frage. Diese Leitungen lassen sich später auch als Förderpipelines für den Abtransport der Rohstoffe oder des Wärmeträgers verwenden. Die Strecken 40 können mit Tunnelbohrmaschinen oder bergmännisch im Bohr- und Sprengverfahren je nach Untergrund oder nach Wirtschaftlichkeit im Hinblick auf die Streckenlänge aufgefahren werden. Als Ausbau kommen auch Segmental Lining in Frage. Es lassen sich somit gerade im nahen Küstenbereich oder im Wattenmeer wasserunabhängige Zugänge zu den Bohrungen schaffen, die gleichzeitig insbesondere bei Öl- und Gasförderung eine hohe Sicherheit gegen Umweltverschmutzungen aufweisen. Auch ist eine hohe Sicherheit gegen Witterungseinflüsse und Wetterextreme wie Sturm und dergleichen gegeben.

Während der Produktionszeit der Bohrung kann das Schachtbauwerk 20 einfach mit einer Abdeckung 29 verschlossen werden. -Der Zugang zur Bohrung bleibt somit möglich. Auf diese Weise wird für die Bohrung eine hohe Sicherheit gegenüber Dritten erzeugt. Auch die Umwelt ist aufgrund des Schachtbauwerks während der Produktionszeit gegenüber Beeinträchtigungen gesichert. Weiterhin ist es möglich nach Beendigung der Produktionszeit das Schachtbauwerk 20 wieder vollständig rückzubauen und zu verfüllen.

### Bezugszeichenliste

- 10: Bohranlage
- 11: Hebewerk
- 12: Hubzylinder
- 13: Bodenplatte
- 14: Tragbalken
- 15: Führung
- 16: Topdrive
- 17: Schwenkwerk
- 18: Blow-Out-Preventer
- 19: Anschluss Spülungskreislauf
- 20: Schachtbauwerk
- 21: Schachtquerschnitt
- 22: Schachtwand
- 23: Schachtsohle
- 24: Aufnahme
- 25: Aussparung
- 26: Vertiefung
- 27: Leiter
- 28: Ausbau
- 29: Abdeckung
- 30: Bohrstangenmagazin
- 31: Bohrstange
- 32: Öffnung
- 40: Strecke

## Patentansprüche

1. Verfahren zum Erstellen einer Tiefbohrung in einem emissionssensitiven Bereich an Land mit den Schritten:
- Erstellen eines Schachtbauwerks (20);
- Einbauen einer stationären Bohranlage (10) in das Schachtbauwerk (20);
- Vorbereiten einer Sohle (23) des Schachtbauwerks (20) als Bohransatzpunkt, wobei ein Turm der Bohranlage (10) an wenigstens einer Wand des Schachtbauwerks (20) befestigt wird und ein Bohrgestängelager (30) im Schachtbauwerk (20) senkrecht an einer Wand des Schachtbauwerks (20) angeordnet wird;
- Niederbringen der Tiefbohrung mit einem geeigneten Bohrverfahren.

2. Verfahren nach Anspruch 1, **dadurch gekennzeichnet, dass** das Schachtbauwerk (20) mit einer automatischen Schachtabsenkmaschine, bergmännisch im Bohr- und Sprengverfahren und/oder mittels Gefrierschachtverfahren hergestellt wird.

3. Verfahren nach Anspruch 1 oder 2, **dadurch gekennzeichnet, dass** die Tiefe des Schachtbauwerks (20) 15 bis 100 m bevorzugt 30 bis 50 m beträgt, und/oder dass der Durchmesser des Schachtbauwerks (20) bis 20 m bevorzugt bis 15 m beträgt.

4. Verfahren nach einem der Ansprüche 1 bis 3, **dadurch gekennzeichnet, dass** eine Energieversorgung der Bohranlage (10), Hilfsaggregate, insbesondere Tanks, Pumpen und/oder Aufbereitungsvorrichtungen für das Bereitstellen einer Bohrspülung im Schachtbauwerk (20) angeordnet werden.

5. Verfahren nach einem der Ansprüche 1 bis 4, **dadurch gekennzeichnet, dass** die Tiefe des Schachtbauwerks (20) so ausgelegt wird, dass die Bohranlage (10) mit ihrer Gesamthöhe sich im Schachtbauwerk (20) befindet, und/oder dass das Schachtbauwerk (20) abgedeckt wird.

6. Verfahren nach einem der Ansprüche 1 bis 5, **dadurch gekennzeichnet, dass** das Schachtbauwerk (20) an wenigstens ein untertägiges weiteres Bauwerk (40), insbesondere eine Strecke, ein Stollen und/oder eine Bohrung angeschlossen wird, und/oder dass das Schachtbauwerk (20) in seinem Sohlenbereich (23) mit Übertage verbunden wird.

7. Verfahren nach einem der Ansprüche 1 bis 6, **dadurch gekennzeichnet, dass** von der Sohle (23) des Schachtbauwerks (20) eine Vertiefung (26) im Bereich eines Bohrlochansatzpunktes erstellt wird, in die ein Blow-Out-Preventer (18) eingebaut wird.

8. Verfahren nach einem der Ansprüche 6 oder 7, **dadurch gekennzeichnet, dass** die Versorgung mit Material, Energie und/oder Frischluft während des Bohrbetriebs über das weitere untertägige Bauwerk (40) zumindest teilweise erfolgt.

9. Bohrvorrichtung zur Durchführung des Verfahrens nach einem der Ansprüche 1 bis 8 mit
- einem Schachtbauwerk (20) und
- einer stationären Bohranlage (10), die im Schachtbauwerk (20) angeordnet ist, wobei ein Turm der Bohranlage an wenigstens einer Wand (22) des Schachtbauwerks (20) befestigt ist und ein Bohrgestängelager (30) im Schachtbauwerk (20) senkrecht an einer Wand (22) des Schachtbauwerks (20) angeordnet ist.

10. Bohrvorrichtung nach Anspruch 9, **dadurch gekennzeichnet, dass** die Tiefe des Schachtbauwerks (20) 15 bis 100 m bevorzugt 30 bis 50 m beträgt und/oder dass der Durchmesser des Schachtbauwerks (20) bis 20 m bevorzugt bis 15 m beträgt.

11. Bohrvorrichtung nach Anspruch 9 oder 10, **dadurch gekennzeichnet, dass** eine Energieversorgung der Bohranlage (10) und/oder Hilfsaggregate, insbesondere die Tanks, Pumpen und/oder Aufbereitungsvorrichtungen für das Bereitstellen einer Bohrspülung im Schachtbauwerk (20) angeordnet sind.

12. Bohrvorrichtung nach einem der Ansprüche 9 bis 11, **dadurch gekennzeichnet, dass** das Schachtbauwerk (20) abgedeckt ist.

13. Bohrvorrichtung nach einem der Ansprüche 9 bis 12, **dadurch gekennzeichnet, dass** die Tiefe des Schachtbauwerks (20) so ausgelegt ist, dass die Bohranlage (10) mit ihrer Gesamthöhe sich im Schachtbauwerk (20) befindet.

14. Bohrvorrichtung nach einem der Ansprüche 9 bis 13, **dadurch gekennzeichnet, dass** das Schachtbauwerk (20) an wenigstens ein untertägiges weiteres Bauwerk (40), insbesondere eine Strecke, ein Stollen und/oder eine Bohrung angeschlossen ist, und/oder dass das Schachtbauwerk (20) in seinem Sohlenbereich (23) mit Übertage verbunden ist.

15. Bohrvorrichtung nach einem der Ansprüche 9 bis 14, **dadurch gekennzeichnet, dass** in der Sohle (23) des Schachtbauwerks (20) eine Vertiefung (26) im Bereich eines Bohrlochansatzpunktes vorgesehen ist, in die ein Blow-Out-Preventer (18) einbaubar ist.

## Claims

1. Method for creating a deep borehole in an emission-sensitive region on shore, including the steps:
- creating a shaft structure (20);
- installing a stationary drilling system (10) into the shaft structure (20);
- preparing a floor (23) of the shaft structure (20) as a drilling starting point, wherein a tower of the drilling system (10) is fastened to at least one wall of the shaft structure (20) and a drill rod assembly store (30) is arranged in the shaft structure (20) perpendicularly on a wall of the shaft structure (20);
- sinking the deep borehole using a suitable drilling method.

2. Method according to Claim 1, **characterized in that** the shaft structure (20) is produced using an automatic shaft sinking machine, by mining using a drilling and blasting method and/or by means of freezing shaft methods.

3. Method according to Claim 1 or 2, **characterized in that** the depth of the shaft structure (20) is 15 to 100 m, preferably 30 to 50 m, and/or **in that** the diameter of the shaft structure (20) is up to 20 m, preferably up to 15 m.

4. Method according to one of Claims 1 to 3, **characterized in that** an energy supply of the drilling system (10), auxiliary units, in particular tanks, pumps and/or processing devices for providing a drilling fluid, are arranged in the shaft structure (20).

5. Method according to one of Claims 1 to 4, **characterized in that** the depth of the shaft structure (20) is designed in such a way that the entire height of the drilling system (10) is located in the shaft structure (20) and/or **in that** the shaft structure (20) is covered.

6. Method according to one of Claims 1 to 5, **characterized in that** the shaft structure (20) is connected to at least one underground further structure (40), in particular a road, a drift and/or a borehole and/or **in that** the shaft structure (20) is connected in its floor region (23) to the surface.

7. Method according to one of Claims 1 to 6, **characterized in that** a depression (26), into which a blowout preventer (18) is installed, is created by the floor (23) of the shaft structure (20) in the region of a borehole starting point.

8. Method according to one of Claims 6 to 7, **characterized in that** the supply with material, energy and/or fresh air is at least partly carried out via the further underground structure (40) during the drilling operation.

9. Drilling device, in particular for carrying out the method according to one of Claims 1 to 8, with
- a shaft structure (20) and
- a stationary drilling system (10) arranged in the shaft structure (20), wherein a tower of the drilling system (10) is fastened to at least one wall (22) of the shaft structure (20) and a drill rod assembly store (30) is arranged in the shaft structure (20) perpendicularly on a wall (22) of the shaft structure (20).

10. Drilling device according to Claim 9, **characterized in that** the depth of the shaft structure (20) is 15 to 100 m, preferably 30 to 50 m, and/or **in that** the diameter of the shaft structure (20) is up to 20 m, preferably up to 15 m.

11. Drilling device according to Claim 9 or 10, **characterized in that** an energy supply of the drilling system (10) and/auxiliary units, in particular the tanks, pumps and/or processing devices for providing a drilling fluid, are arranged in the shaft structure (20).

12. Drilling device according to one of Claims 9 to 11, **characterized in that** the shaft structure (20) is covered.

13. Drilling device according to one of Claims 9 to 12, **characterized in that** the depth of the shaft structure (20) is designed in such a way that the entire height of the drilling system (10) is located in the shaft structure (20).

14. Drilling device according to one of Claims 9 to 13, **characterized in that** the shaft structure (20) is connected to at least one underground further structure (40), in particular a road, a drift and/or a borehole and/or **in that** the shaft structure (20) is connected in its floor region (23) to the surface.

15. Drilling device according to one of Claims 9 to 14, **characterized in that** a depression (26), into which a blowout preventer (18) can be installed, is provided in the floor (23) of the shaft structure (20).

## Revendications

1. Procédé pour l'exécution d'un sondage dans une zone sensible aux émissions à terre, comprenant les étapes suivantes:
- exécution d'une structure de puits (20);
- montage d'une installation de forage stationnaire (10) dans la structure de puits (20);
- préparation d'une semelle (23) de la structure de puits (20) comme point de départ de forage, dans lequel on fixe une tour de l'installation de forage (10) à au moins une paroi de la structure de puits (20) et on dispose un palier de tige de forage (30) dans la structure de puits (20) perpendiculairement à une paroi de la structure de puits (20);
- forage du sondage avec un procédé de forage approprié.

2. Procédé selon la revendication 1, **caractérisé en ce que** l'on fabrique la structure de puits (20) avec une machine automatique de fonçage de puits, à la manière des puits de mine par un procédé par forage et explosions et/ou au moyen de procédés de fonçage de puits par congélation.

3. Procédé selon la revendication 1 ou 2, **caractérisé en ce que** la profondeur de la structure de puits (20) vaut de 15 à 100 m, de préférence de 30 à 50 m, et/ou en ce que le diamètre de la structure de puits (20) vaut jusqu'à 20 m, de préférence jusqu'à 15 m.

4. Procédé selon l'une quelconque des revendications 1 à 3, **caractérisé en ce que** l'on dispose dans la structure de puits (20) une alimentation en énergie pour l'installation de forage (10), des groupes auxiliaires, en particulier des réservoirs, des pompes et/ou des dispositifs de préparation pour la réalisation d'un balayage de forage.

5. Procédé selon l'une quelconque des revendications 1 à 4, **caractérisé en ce que** l'on dimensionne la profondeur de la structure de puits (20) de telle manière que l'installation de forage (10) se trouve avec toute sa hauteur dans la structure de puits (20), et/ou que la structure de puits (20) soit recouverte.

6. Procédé selon l'une quelconque des revendications 1 à 5, **caractérisé en ce que** l'on raccorde la structure de puits (20) à au moins une autre structure souterraine (40), en particulier à un tronçon, une galerie et/ou un autre forage, et/ou **en ce que** l'on raccorde la structure de puits (20) dans sa région de semelle (23) à une installation de surface.

7. Procédé selon l'une quelconque des revendications 1 à 6, **caractérisé en ce que** l'on exécute à partir de la semelle (23) de la structure de puits (20) une cavité (26) dans la région d'un point de départ d'un trou de forage, dans laquelle on installe un bloc obturateur de puits (18).

8. Procédé selon l'une quelconque des revendications 6 ou 7, **caractérisé en ce que** l'on assure au moins partiellement l'alimentation en matériel, en énergie et/ou en air frais pendant l'opération de forage au moyen de l'autre structure souterraine (40).

9. Dispositif pour la mise en oeuvre du procédé selon l'une quelconque des revendications 1 à 8, comprenant:
- une structure de puits (20), et
- une installation de forage stationnaire (10), qui est disposée dans la structure de puits (20), dans lequel une tour de l'installation de forage est fixée à au moins une paroi (22) de la structure de puits (20) et un palier de tige de forage (30) est disposé dans la structure de puits (20) perpendiculairement à une paroi (22) de la structure de puits (20).

10. Dispositif de forage selon la revendication 9, **caractérisé en ce que** la profondeur de la structure de puits (20) vaut de 15 à 100 m, de préférence de 30 à 50 m, et/ou **en ce que** le diamètre de la structure de puits (20) vaut jusqu'à 20 m, de préférence jusqu'à 15 m.

11. Dispositif de forage selon la revendication 9 ou 10, **caractérisé en ce qu'**une alimentation en énergie de l'installation de forage (10) et/ou des groupes auxiliaires, en particulier des réservoirs, des pompes et/ou des dispositifs de préparation pour la réalisation d'un balayage de forage sont disposés dans la structure de puits (20).

12. Dispositif de forage selon l'une quelconque des revendications 9 à 11, **caractérisé en ce que** la structure de puits (20) est recouverte.

13. Dispositif de forage selon l'une quelconque des revendications 9 à 12, **caractérisé en ce que** la profondeur de la structure de puits (20) est dimensionnée de telle manière que l'installation de forage (10) se trouve avec toute sa hauteur dans la structure de puits (20).

14. Dispositif de forage selon l'une quelconque des revendications 9 à 13, **caractérisé en ce que** la structure de puits (20) est raccordée à au moins une autre structure souterraine (40), en particulier un tronçon, une galerie et/ou un forage, et/ou **en ce que** la structure de puits (20) est raccordée dans sa région de semelle (23) à une installation de surface.

15. Dispositif de forage selon l'une quelconque des revendications 9 à 14, **caractérisé en ce qu'**il est prévu dans la semelle (23) de la structure de puits (20) une cavité (26) dans la région du point de départ du trou de forage, dans laquelle un bloc obturateur de puits (18) peut être installé.
